# FASCICULE DE BREVET EUROPEEN

(11) **EP 3 495 263 B1**
(45) Date de publication et mention de la délivrance du brevet: **27.04.2022**
(21) Numéro de dépôt: 18210787.0
(22) Date de dépôt: 06.12.2018
(51) Int. Cl.: B64C 25/20, B64C 25/26, B64C 25/14

(54) **PROCEDE DE MANOEUVRE D'UN ATTERRISSEUR D'AERONEF ENTRE UNE POSITION DEPLOYEE ET UNE POSITION RETRACTEE**
VERFAHREN ZUM MANÖVRIEREN EINES LUFTFAHRZEUGFAHRWERKS ZWISCHEN EINER EINGEZOGENEN UND EINER AUSGEFAHRENEN POSITION
METHOD OF OPERATING AN AIRCRAFT LANDING GEAR BETWEEN A DEPLOYED POSITION AND A RETRACTED POSITION

(30) Priorité: 11.12.2017 FR 1761956
(43) Date de publication de la demande: 12.06.2019
(73) Titulaire: Safran Landing Systems, 78140 Vélizy-Villacoublay (FR)
(72) Inventeur: HENRION, Philippe, 78140 Vélizy-Villacoublay (FR); DUBOIS, Sébastien, 78140 Vélizy-Villacoublay (FR); EUZET, Bertrand, 78140 Vélizy-Villacoublay (FR); QUENERCH'DU, Marc, 78140 Vélizy-Villacoublay (FR)
(74) Mandataire: Lavialle, Bruno François Stéphane

(56) Documents cités:
- EP-A2- 0 026 689
- FR-A1- 2 928 623
- GB-A- 2 501 906
- US-A- 2 385 063
- US-A- 3 198 461
- US-A- 5 022 609

## Description

L'invention concerne un atterrisseur d'aéronef mobile entre une position déployée et une position rétractée.

### ARRIERE PLAN DE L'INVENTION

On connaît des atterrisseurs d'aéronef montés mobiles sur l'aéronef entre une position déployée et une position rétractée. En général, chaque atterrisseur est associé à un actionneur de manœuvre pour déplacer l'atterrisseur de l'une à l'autre des positions, et un actionneur de déverrouillage pour déverrouiller l'organe de stabilisation maintenant les bielles de la contrefiche en position alignée.

Cependant, il est possible de n'utiliser qu'un seul actionneur assurant les deux fonctions. On a par exemple proposé dans le document FR2946319 d'utiliser un actionneur de manœuvre de type électromécanique rotatif attelé à l'un des bras de l'organe de stabilisation de la contrefiche en position alignée pour à la fois assurer la manœuvre de l'atterrisseur et le déverrouillage de l'organe de stabilisation. Cet actionneur est solidarisé à la structure de l'aéronef et nécessite donc que celle-ci soit prévue pour recevoir un tel actionneur.

Le document US2385063 décrit une structure de support avec train d'atterrissage rétractable connecté à la structure de support, ledit train d'atterrissage comprenant une jambe de choc et une jambe de force pliable pour renforcer la jambe de choc dans sa position basse, ladite jambe de force pliable ayant deux bras de liaison connectés ensemble de façon pivotante, une unité de puissance pour rétracter le train d'atterrissage, et un agencement de liaison s'étendant entre la jambe de force pliable et la jambe de choc pour verrouiller la jambe de force pliable.

### OBJET DE L'INVENTION

L'invention vise à proposer un procédé de manœuvre d'un atterrisseur d'aéronef entre une position déployée et une position rétractée, simplifiant la mise en place de l'atterrisseur sur la structure de l'aéronef.

### PRESENTATION DE L'INVENTION

En vue de la réalisation de ce but, on propose un procédé de manœuvre d'un atterrisseur d'aéronef selon la revendication 1.

Le procédé de l'invention permet de n'utiliser qu'un seul actionneur pour assurer le déverrouillage de l'organe de stabilisation et le relevage de l'atterrisseur, cet actionneur étant attelé entre deux éléments de l'atterrisseur de sorte qu'aucune attache pour l'actionneur n'est à prévoir sur la structure de l'aéronef. Les efforts dus à l'actionneur sont pour partie transmis à la structure de l'aéronef uniquement via les axes d'articulation de l'atterrisseur sur la structure de l'aéronef.

### PRESENTATION DES FIGURES

L'invention sera mieux comprise à la lumière de la description qui suit d'un mode particulier de mise en œuvre de l'invention en référence aux figures des dessins annexés parmi lesquelles
- La figure 1 est une vue de côté d'un atterrisseur faisant application des dispositions de l'invention, illustré ici en position déployée ;
- la figure 2 est une vue analogue à la figure 1, montrant l'atterrisseur dans une position déverrouillée au début de la phase de relevage ;
- la figure 3 est une vue en perspective de l'atterrisseur dans la position de la figure 2 ;
- la figure 4 est une vue analogue à la figure 1, montrant l'atterrisseur en fin de relevage, dans la position rétractée.

### DESCRIPTION DETAILLEE D'UN MODE PARTICULIER DE MISE EN ŒUVRE DE L'INVENTION

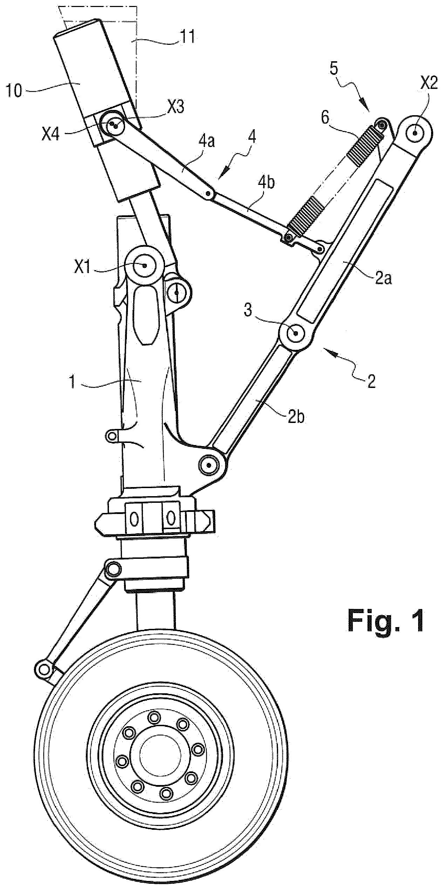

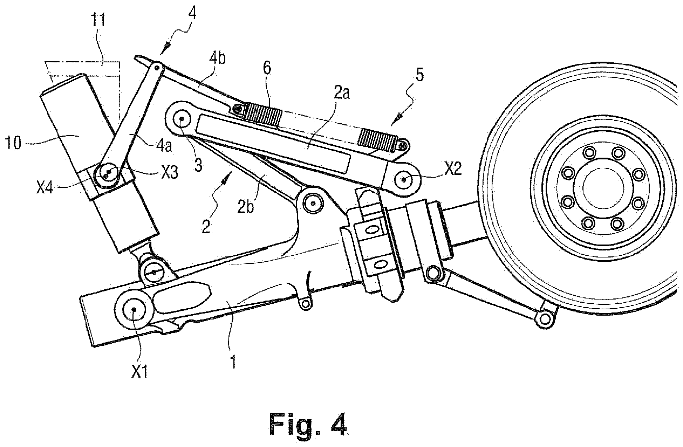

En référence tout d'abord à la figure 1, l'atterrisseur comporte de façon connue en soi une jambe 1 articulée à la structure de l'aéronef selon un axe d'articulation X1 (vu ici en bout) pour être mobile entre une position déployée illustrée ici dans laquelle l'atterrisseur est amené préalablement à un atterrissage, et une position rétractée qui est celle de l'atterrisseur en vol, visible à la figure 4.

Une contrefiche briseuse 2 est articulée d'une part sur la jambe 1 et d'autre part sur la structure de l'aéronef. La contrefiche briseuse 2 comprend deux bielles 2a, 2b, articulées entre elles au niveau d'un genou 3. La bielle 2a est par ailleurs articulée sur l'aéronef selon un axe d'articulation X2, tandis que la bielle 2b est articulée sur la jambe 1. La contrefiche briseuse 2 est stabilisée en position sensiblement alignée au moyen d'un organe de stabilisation 4 comportant deux biellettes 4a, 4b, également articulées entre elles. La biellette 4a est articulée sur l'aéronef selon un axe X3, et la biellette 4b est articulée sur la contrefiche 2. Les biellettes 4a, 4b sont maintenues en position sensiblement alignée par un organe de verrouillage 5 comportant des ressorts de rappel 6 rappelant les biellettes 4a, 4b vers la position de verrouillage illustrée ici définie par des butées entre les biellettes. Ainsi stabilisée, la contrefiche briseuse 2 s'oppose à toute rotation de la jambe 1 autour de son axe d'articulation X1, de sorte que la position déployée est une position stable. Comme cela est bien connu, les bielles 2a, 2b et les biellettes 4a, 4b sont conçues de sorte que pour arriver à la position verrouillée illustrée à la figure 1, le genou d'articulation des bielles et le genou d'articulation des biellettes passent légèrement au-delà de l'alignement géométrique des bielles et biellettes.

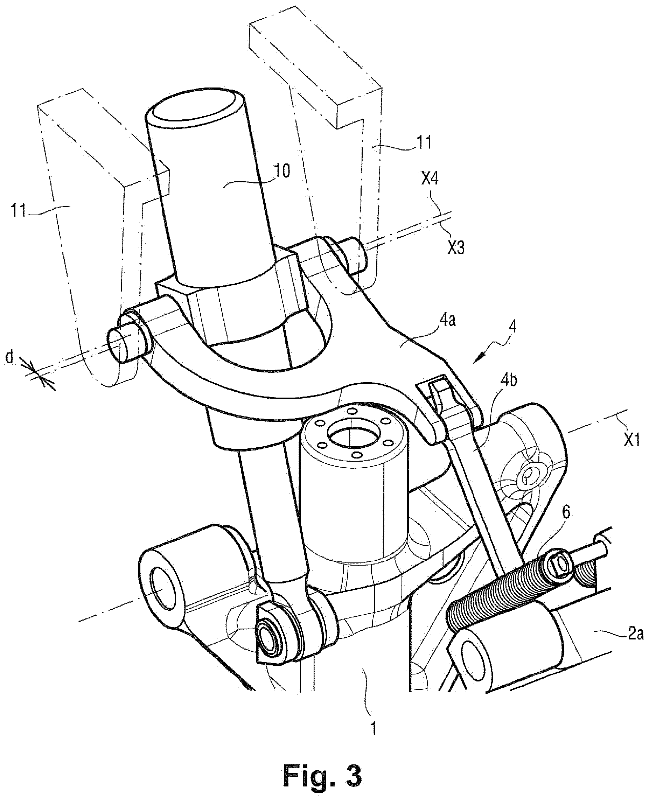

Selon l'invention, un actionneur de manœuvre, en l'occurrence ici un actionneur linéaire 10, par exemple un vérin hydraulique ou un actionneur électromécanique, est disposé pour être attelé d'une part à la biellette 4a de l'organe de stabilisation 4 (celle qui est ici articulée sur la structure de l'aéronef) selon un axe d'articulation X4, et d'autre part à la jambe 1 de l'atterrisseur. Comme cela est plus particulièrement visible à la figure 3, la biellette 4a est ici terminée en fourche et l'actionneur 10 s'étend entre les bras de la fourche pour être tourillonné sur les bras de la biellette 4a selon l'axe X4 parallèle à l'axe X3 mais décalé d'un déport d. On voit sur la figure 3 deux supports 11 qui descendent du plafond de la soute de réception de l'atterrisseur en position rétractée qui servent à l'articulation de la biellette 4a sur la structure de l'aéronef selon l'axe X3. L'actionneur 10 n'est pas articulé sur ces supports, mais bien sur la biellette 4a. La biellette 4b s'étend ici sensiblement selon le plan de symétrie de l'atterrisseur, tandis que la biellette 4a est décalée, ce qui permet de faire passer l'actionneur de relevage 10 sur le côté du fût du caisson de la jambe et d'atteler l' actionneur 10 sur la jambe 1 à proximité de l'un de ses pivots d'articulation sur la structure de l'aéronef.

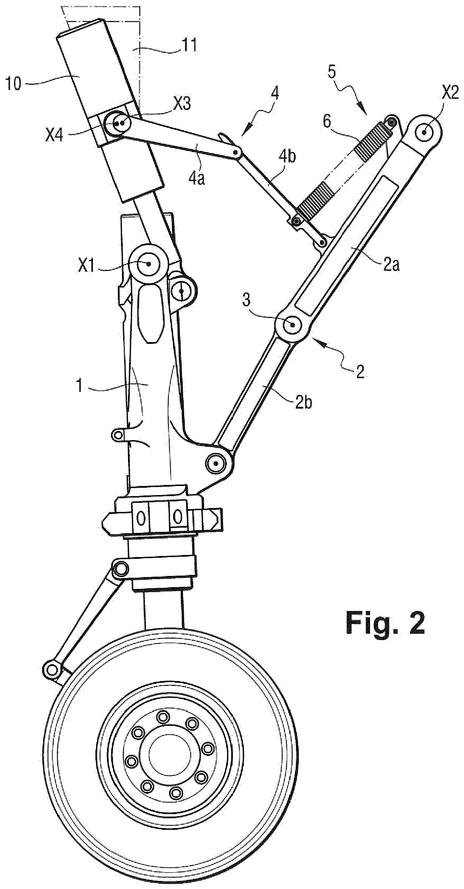

Le fonctionnement de l'ensemble est maintenant expliqué en référence aux figures 1 à 4. Partant de la position déployée illustrée à la figure 1, l'actionneur de manœuvre 10 est sollicité (ici en rétraction) pour exercer un effort sur la biellette 4a, ce qui a pour effet de faire pivoter celle-ci autour de son axe de rotation X3 comme illustré sur les figures 2 et 3, et ainsi briser l'alignement des biellettes 4a, 4b à l'encontre de l'action des ressorts de rappel 6 de l'organe de verrouillage 5. Ce mouvement de pivotement de la biellette 4a est permis par le décalage entre les axes d'articulation X3 et X4, instaurant un petit bras de levier suffisant pour que l'effort de l'actionneur de manœuvre 10 puisse contrer l'effort des ressorts de rappel 6.

Comme la biellette 4b est attelée à la contrefiche 2, l'alignement des bielles 2a, 2b est également brisé. L'atterrisseur est ainsi déverrouillé et peut être pivoté autour de son axe d'articulation X1 sous l'action continue de l'actionneur de manœuvre 10, jusqu'à arriver à la position rétractée illustrée à la figure 4, dans laquelle l'atterrisseur est par exemple immobilisé au moyen d'un crochet de verrouillage monté sur la structure de l'aéronef pour crocheter une olive solidaire de la jambe de l'atterrisseur à son arrivée dans la position rétractée. Ainsi, avec un seul actionneur, on assure le déverrouillage de l'organe de stabilisation, ce qui provoque le désalignement de la contrefiche, et, partant, le déplacement de la jambe.

Pour le déplacement inverse de la position rétractée à la position déployée, il suffit de lâcher l'atterrisseur et le laisser tomber sous l'effet de la gravité et des efforts aérodynamiques, l'actionneur pouvant être le cas échéant utilisé pour ralentir le mouvement à l'arrivée dans la position déployée, pour éviter tout choc dommageable.

La distance entre les deux axes d'articulation de l'actionneur n'est pas toujours suffisante pour être compatible avec la longueur totale d'un actionneur linéaire, essentiellement déterminée par la course utile de l'actionneur. L'utilisation d'un actionneur de manœuvre 10 tourillonné au moyen de deux pivots s'étendant des flancs du corps de l'actionneur, comme illustré ici, permet de rendre compatible ce type d'actionneur avec la course utile nécessaire à la manœuvre de l'atterrisseur. A la figure 3, on voit clairement une bonne moitié du corps de l'actionneur 10 dépasser au-delà des tourillons définissant l'axe d'articulation X4 de l'actionneur sur la biellette 4a.

L'invention n'est pas limitée à ce qui vient d'être décrit, mais englobe au contraire toute variante entrant dans le cadre défini par les revendications.

En particulier, les axes d'articulation de tous les éléments de l'atterrisseur ne sont pas nécessairement tous parallèles entre eux. En outre, l'actionneur de manœuvre utilisé peut également être du type rotatif.

## Revendications

1. Procédé de manœuvre d'un atterrisseur d'aéronef comportant une jambe (1) mobile entre une position déployée et une position rétractée dans laquelle la jambe est immobilisée au moyen d'une contrefiche(2) maintenue en position alignée par un organe de stabilisation (4) comprenant deux biellettes (4a, 4b) dont l'une est articulée sur la structure de l'aéronef, le procédé comportant l'utilisation d'un unique actionneur de manœuvre (10) pour assurer son relevage de la position déployée à la position rétractée, **caractérisé en ce que** l'on attelle l'actionneur uniquement à la jambe et à l'organe de stabilisation de sorte que l'activation de l'actionneur provoque d'abord le déverrouillage de l'organe de stabilisation puis la manœuvre de la jambe de l'atterrisseur vers la position rétractée.

2. Procédé selon la revendication 1, dans lequel les deux biellettes (4a,4b) sont rappelées en position alignée par un organe de rappel (5), l'une des biellettes étant articulée sur la structure de l'aéronef selon un axe d'articulation (X3), et l'actionneur de manœuvre (10) étant un actionneur linéaire articulé sur cette biellette selon un axe d'articulation (X4) parallèle à l'axe d'articulation (X3) de la biellette sur la structure de l'aéronef, mais décalé.

3. Procédé selon la revendication 2, dans lequel la biellette (4a) articulée sur la structure de l'aéronef est terminée en fourche ayant deux bras entre lesquels l'actionneur de manœuvre (10) s'étend pour être articulé sur les bras de la fourche.

4. Procédé selon la revendication 3, dans lequel l'actionneur de manœuvre (10) est tourillonné sur les bras de la fourche.

## Claims

1. A method of moving an aircraft undercarriage comprising a leg (1) that is movable between a deployed position and a retracted position in which the leg is held stationary by means of a strut (2) held in an aligned position by a stabilizer member (4) comprising two links (4a, 4b), one of which is hinged to the structure of the aircraft, the method including using a single drive actuator (10) for raising the undercarriage from the deployed position to the retracted position, the method being **characterized in that** the actuator is coupled only to the leg and to the stabilizer member in such a manner that on being activated the actuator begins by causing the stabilizer member to unlock and then moves the undercarriage leg towards the retracted position.

2. A method according to claim 1, wherein the two links (4a, 4b) are urged into the aligned position by a return member (5), one of the links being hinged to the structure of the aircraft about a hinge axis (X3), and the drive actuator (10) is a linear actuator hinged to the link about a hinge axis (X4) parallel to the hinge axis (X3) of the link to the structure of the aircraft, but offset therefrom.

3. A method according to claim 2, wherein the link (4a) hinged to the structure of the aircraft is terminated by a fork having two arms between which the drive actuator (10) extends in order to be hinged to the arms of the fork.

4. A method according to claim 3, wherein the drive actuator (10) is hinged to the arms of the fork by means of stub axles.

## Patentansprüche

1. Verfahren zum Bewegen eines Luftfahrzeugfahrwerks, das ein Bein (1) umfasst, das zwischen einer ausgefahrenen Position und einer eingezogenen Position beweglich ist, in der das Bein mittels einer Strebe (2) fixiert wird, die durch ein zwei Verbindungsstangen (4a, 4b) umfassendes Stabilisierungsorgan (4) in fluchtender Stellung gehalten wird, von denen eine Verbindungsstange an der Struktur des Luftfahrzeugs angelenkt ist, wobei das Verfahren die Nutzung eines einzigen Bewegungsaktors (10) umfasst, um das Einziehen des Fahrwerks von der ausgefahrenen Position in die eingezogene Position sicherzustellen, **dadurch gekennzeichnet, dass** man den Aktor einzig an das Bein und an das Stabilisierungsorgan koppelt, sodass die Aktivierung des Aktors zunächst die Entriegelung des Stabilisierungsorgans und dann die Bewegung des Beins des Fahrwerks in die eingezogene Position verursacht.

2. Verfahren nach Anspruch 1, bei dem die beiden Verbindungsstangen (4a, 4b) durch ein Rückstellorgan (5) in eine fluchtende Position rückgestellt werden, wobei eine der Verbindungsstangen an der Struktur des Luftfahrzeugs um eine Gelenkverbindungsachse (X3) angelenkt ist, und wobei der Bewegungsaktor (10) ein linearer Aktor ist, der an dieser Verbindungsstange um eine Gelenkverbindungsachse (X4) angelenkt ist, die parallel, aber versetzt zur Gelenkverbindungsachse (X3) zur Gelenkverbindung der Verbindungsstange mit der Struktur des Luftfahrzeugs ist.

3. Verfahren nach Anspruch 2, bei dem die Verbindungsstange (4a), die an der Struktur des Luftfahrzeugs angelenkt ist, mit einer Gabel abschließt, die zwei Arme hat, zwischen denen sich der Bewegungsaktor (10) erstreckt, um an den Armen der Gabel angelenkt zu werden.

4. Verfahren nach Anspruch 3, bei dem der Bewegungsaktor (10) an den Armen der Gabel drehbar gelagert ist.
